# EUROPÄISCHE PATENTSCHRIFT

(11) **EP 2 492 676 B1**
(45) Veröffentlichungstag und Bekanntmachung des Hinweises auf die Patenterteilung: **22.11.2017**
(21) Anmeldenummer: 12153375.6
(22) Anmeldetag: 31.01.2012
(51) Int. Cl.: G01N 27/41, G01N 15/06

(54) **Sensor und Verfahren zum Detektieren von Partikeln in einem Gasstrom**
Sensor and method for detecting particles in a gas flow
Capteur de détection et procédé de particules dans un flux de gaz

(30) Priorität: 22.02.2011 DE 102011004540
(43) Veröffentlichungstag der Anmeldung: 29.08.2012
(73) Patentinhaber: Robert Bosch GmbH, 70442 Stuttgart (DE)
(72) Erfinder: Seiler, Thomas, 70195 Stuttgart (DE); Peters, Christoph, 70437 Stuttgart (DE)

(56) Entgegenhaltungen:
- DE-A1-102008 006 417
- DE-A1-102008 040 314
- DE-A1-102008 044 374
- DE-A1-102009 047 697
- DE-C1- 10 133 385

## Beschreibung

Die vorliegende Erfindung betrifft einen Sensor zum Detektieren von Substanzen in einem Gasstrom. Die vorliegende Erfindung betrifft insbesondere einen Partikelsensor zur Detektion von Rußpartikeln in einem Abgas.

### Stand der Technik

Das Messen des Rußausstoßes eines Motors ist von wachsender Bedeutung. So muss der Rußausstoß nach dem Motor beziehungsweise nach einem Dieselpartikelfilter während des Betriebs überwacht und die Funktionalität dieser Überwachung im Rahmen einer On-Board-Diagnose sichergestellt werden. Darüber hinaus ist eine Beladungsprognose von Dieselpartikelfiltern notwendig, um eine hohe Systemsicherheit bei wenigen effizienten, Kraftstoff sparenden Regenerationszyklen zu erreichen und kostengünstige Filtermaterialien, beispielsweise Cordierit, einsetzen zu können. Eine Möglichkeit hierzu bietet der resistive Rußsensor, der die Widerstandsänderung einer Elektrodenstruktur aufgrund von Rußanlagerung zur Detektion des Rußes heranzieht. Aufgrund seiner Funktionsweise ordnet sich der resistive Rußsensor bei den sammelnden Prinzipien ein.

Die Arbeitsweise eines bekannten resistiven Partikelsensors, insbesondere für den Abgasstrang eines Fahrzeugs mit einer Brennkraftmaschine, ist wie folgt. Während einer Messphase lagert sich ein Teil der zu detektierenden Partikel an der Oberfläche eines Sensorsubstrats beziehungsweise an einer Elektrodenstruktur an. Die angelagerten Partikel sind dabei meist leitfähige Partikel, wie etwa Rußpartikel, die sich in dem Abgas der Brennkraftmaschine befinden. Bei einer zwischen den Elektroden angelegten Spannung schließen die angelagerten Partikel die Elektroden kurz und verringern so den sich zwischen den Elektroden ausbildenden elektrischen Widerstand beziehungsweise erhöhen den Stromfluss, so dass durch eine zeitliche Veränderung des Widerstands beziehungsweise des Stromflusses Rückschlüsse auf die Partikelkonzentration möglich sind.

Ein derartiger Sensor ist beispielsweise aus WO 03/006976 A2 bekannt. Hier sind ein Sensor zur Detektion von Teilchen und ein Verfahren zu dessen Funktionskontrolle beschrieben. Der Sensor umfasst zwei Messelektroden, wie etwa zwei interdigitale Kammelektroden, die auf einem Substrat angeordnet sind. Durch eine Messung des Widerstands zwischen diesen Messelektroden kann mit dem Sensor insbesondere die Konzentration von Rußpartikeln in einem Abgasstrom ermittelt werden.

Aus DE 101 49 333 A1 ist eine Sensorvorrichtung zur Messung der Feuchtigkeit von Gasen bekannt. Diese Sensorvorrichtung umfasst eine Widerstandsmessstruktur, die aus zwei interdigitalen Kammelektroden besteht. Die aus den Kammelektroden bestehende Widerstandsmessstruktur dient zur Messung eines elektrischen Widerstands einer Rußschicht, welche die Kammelektroden sowie einen Träger überdeckt. Dabei ändert sich der Widerstand der Rußschicht in Abhängigkeit der Feuchtigkeit der mit der Rußschicht in Kontakt tretenden Umgebung. DE 101 33 385 C1 offenbart einen Sensor zum Messen von Feststoffteilchen, wie Ruß - oder Ascheteilchen. Es wird dort die Messung von Kohlenmonoxid und Kohlenwasserstoffen beschrieben, die durch den Abbrand der Rußpartikel entstehen. Das resultierende Potential an der elektrochemischen Zelle dient wiederum der Messung der Rußpartikeln.

In DE 10 2008 040 314 A1 und in DE 10 2008 044 374 A1 sind jeweils Gassensoren mit einem gasdicht abgeschlossenen Innenraum offenbart. In diesem Raum wird eine der zu der detektierenden Gasmenge äquivalente Menge an Sauerstoff gepumpt. Sauerstoff ist im Vergleich zu anderen Gaskomponenten geringerer Konzentration thermodynamisch stabiler. Dadurch wird der Anteil der zu detektierenden Gasmenge, die durch Abreaktion verloren geht, verringert und das Signal-zu-Rausch-Verhältnis der Messung wird verbessert.

### Offenbarung der Erfindung

Gegenstand der vorliegenden Erfindung ist ein Sensor zum Detektieren von Substanzen in einem Gasstrom, insbesondere von Rußpartikeln in einem Abgasstrom, umfassend eine wenigstens zwei Messelektroden aufweisende Messstruktur und eine elektrochemische Pumpzelle, wobei die Pumpzelle aufweist einen Elektrolyt, ein mit dem Elektrolyt in Kontakt stehendes fluiddicht verschlossenes Gasvolumen, eine mit dem Elektrolyt und dem Gasvolumen in Kontakt stehende innere Pumpelektrode und eine mit dem Elektrolyt und einem sich außerhalb der Pumpzelle befindlichen Gas in Kontakt stehende äußere Pumpelektrode, wobei die Messstruktur und die Pumpzelle in Reihe geschaltet sind.

Unter einer elektrochemischen Pumpzelle wird dabei im Rahmen der Erfindung insbesondere eine elektrochemische Zelle verstanden, bei der durch Anlegen einer Potentialdifferenz beziehungsweise einer Pumpspannung zwischen zwei Elektroden, die in Kontakt mit einem Elektrolyt sind, auf elektrochemischem Weg Ionen, wie etwa Sauerstoffionen, transportierbar sind. Daher kann ein Gas, wie beispielsweise Sauerstoff, insbesondere durch elektrochemische Kräfte in ein Volumen beziehungsweise aus einem Volumen gepumpt werden. Dabei kann die Pumpspannung insbesondere zwischen den Pumpelektroden angelegt werden, wobei hiervon aufgrund der Reihenschaltung zwischen Pumpzelle und Messstruktur auch eine Pumpspannung zwischen Pumpelektrode und Messstruktur umfasst ist.

Durch das erfindungsgemäße Vorsehen einer elektrochemischen Pumpzelle, die mit einer Messstruktur in Reihe geschaltet ist, kann beispielsweise der durch sich anlagernde Substanzen beziehungsweise Teilchen ansteigende Strom beziehungsweise abnehmende Widerstand in der Messstruktur dazu verwendet werden, zusammen mit der Pumpzelle ein Gas in ein Gasvolumen oder aus einem Gasvolumen zu pumpen. Zweckmäßigerweise kann die Polarität der Anordnung aus Messstruktur und Pumpzelle derart gewählt werden, dass bei einem durch sich anlagernde Teilchen ansteigenden Strom zwischen den Messelektroden sich in der Pumpzelle beziehungsweise in dem Gasvolumen ein Gas, wie etwa insbesondere Sauerstoff bildet. Dadurch muss für eine Detektion der sich anlagernden Teilchen nicht mehr zwingend der Widerstand beziehungsweise der Stromfluss an der Messstruktur selbst gemessen werden. Vielmehr wird es möglich, Effekte beziehungsweise Eigenschaften, die mit dem Pumpen beziehungsweise insbesondere mit der Gasbildung, also etwa mit dem gebildeten Gaspartialdruck, zusammenhängen, direkt zu messen und auszuwerten. Beispielsweise kann die zum Pumpen benötigte Ladung, Zeit, etc. gemessen werden, da diese Variablen unmittelbar mit dem gebildeten Gaspartialdruck zusammenhängen. So kann indirekt auf den durch die Messstruktur fließenden Strom und damit auf die sich an der Messstruktur anlagernden Teilchen beziehungsweise auf die Konzentration der zu detektierenden Teilchen in dem Gasstrom geschlossen werden.

Dabei ist es insbesondere von Vorteil, dass sich das Galvanipotential der inneren Pumpelektrode bei einer definierten erzeugten Gasmenge beziehungswiese in Abhängigkeit des Gaspartialdrucks schlagartig ändert, so dass auch und insbesondere dieser Potentialsprung zur Detektion von Substanzen herangezogen werden kann. Dieser kann deutlich leichter und verlässlicher gemessen werden, als der sich verstärkende Strom in der Messstruktur.

Mit dem erfindungsgemäßen Sensor wird es daher möglich, die benötigte Dauer einer Detektion beziehungsweise einer Messung von Substanzen, insbesondere der Messung von Rußpartikeln in einem Abgasstrom, erheblich zu senken. Beispielsweise lassen sich Messzeiten in einem Bereich von wenigen Sekunden erzielen. Dadurch kann eine dynamische Messung durchgeführt werden, mit der beispielsweise eine Reaktion auch auf Änderungen der Motorbetriebsparameter in sehr kurzen Abständen möglich ist. Eine Reaktion kann daher ebenfalls in sehr geringen Zeitabständen erfolgen, was eine permanente und dynamische Einstellung des Motormanagements ermöglicht. Dadurch kann Brennstoff gespart und die Umwelt entlastet werden wobei die Lebensdauer eines Dieselpartikelfilters zusätzlich erhöht werden kann.

Ein erfindungsgemäßer Sensor ist dabei einfach im Aufbau und kostengünstig in der Herstellung. Auch die Kompaktheit wird nicht merklich verschlechtert, da keine raumgreifenden Bauteile notwendig sind. Vielmehr ist der Sensor vergleichbar zu herkömmlichen aus dem Stand der Technik bekannten Sensoren problemlos beispielsweise in dem Abgasstrang eines Fahrzeugs anordbar beziehungsweise in diesen integrierbar.

Die wenigstens zwei Messelektroden sind dabei vorzugsweise als interdigitale Kammelektroden ausgebildet. Interdigitale Kammelektroden bieten ein günstiges Messverhalten und können auf einfache Weise auf ein Substrat aufgedruckt werden und so eine Widerstandsmessstruktur ausbilden. Interdigitale Kammelektroden werden auch als Interdigitalelektroden bezeichnet und weisen jeweils eine Struktur aus einer Mehrzahl von parallelen Elektrodenfingern auf, die parallel ineinander greifend angeordnet sind.

Im Rahmen einer vorteilhaften Ausgestaltung des erfindungsgemäßen Sensors ist die äußere Pumpelektrode mit einer der Messelektroden einstückig ausgebildet. Dadurch wird eine besonders einfache Struktur des erfindungsgemäßen Sensors ermöglicht, da auf eine zusätzliche Elektrode sowie eine elektrische Verbindung zwischen den Elektroden verzichtet werden kann. Die äußere Pumpelektrode kann in Kontakt stehen sowohl mit dem Elektrolyt als auch mit dem die zu detektierenden Substanzen enthaltenen Gasstrom als das sich außerhalb der Pumpzelle befindliche Gas.

Es ist weiterhin bevorzugt, dass die innere Pumpelektrode, die äußere Pumpelektrode, der Elektrolyt und das Gasvolumen zumindest teilweise durch eine elektrisch isolierende Deckschicht abgedeckt sind. Dabei kann der Gasantransport zur äußeren Pumpelektrode beispielweise ausschließlich über einen Luftreferenzkanal erfolgen. Einflüsse der sich ändernden Gasdichte des zu vermessenden Gases beziehungsweise der Abgaskonzentration auf das Potential der äußeren Pumpelektrode können so minimiert oder ganz verhindert werden. Das Messergebnis kann so besonders genau gestaltet werden. Darüber hinaus ist dies eine besonders einfache und kostengünstige Ausgestaltung, die innere Pumpelektrode, die äußere Pumpelektrode, den Elektrolytraum und das Gasvolumen von dem Gasstrom zu separieren, und eventuell das Gasvolumen so fluiddicht zu verschließen.

Im Rahmen einer weiteren vorteilhaften Ausgestaltung des erfindungsgemäßen Sensors ist ein Heizelement vorgesehen, um die Messstruktur und den Elektrolyt zu erhitzen. Dadurch ist eine große Anzahl von kommerziell erhältlichen Elektrolyten einsetzbar, die eine geeignete Leitfähigkeit insbesondere bei einer erhöhten Temperatur erreichen. Ein beispielhafter Elektrolyt ist in diesem Fall Zirkondioxid (ZrO₂), das beispielsweise erst bei Temperaturen um 800°C die gewünschte Leitfähigkeit aufweist. Ferner ist das Vorsehen eines separaten Heizers für den Elektrolyt neben einer ohnehin notwendige Heizeinrichtung für die Messstruktur, beispielsweise zum Abbrennen angelagerter Rußpartikel, nicht notwendig. In dieser Ausgestaltung ist der erfindungsgemäße Sensor daher besonders kostengünstig herstellbar.

Im Rahmen einer alternativen Ausgestaltung des erfindungsgemäßen Sensors ist der Elektrolyt als Niedertemperatur-Elektrolyt ausgebildet. Beispielhafte Niedertemperatur Elektrolyte umfassen beispielsweise Polymerelektrolyte. Niedertemperatur-Elektrolyte sind insbesondere leitfähig schon bei geringen Temperaturen wie etwa unter 100°C oder sogar bereits bei Raumtemperatur. Dadurch ist das Vorsehen eines separaten Heizers für den Elektrolyt oder eine Umpositionierung beziehungsweise ein Umbau des Heizelements zum gleichzeitigen Heizen der Messstruktur und des Elektrolyten nicht notwendig. Das Herstellen eines erfindungsgemäßen Sensors ist so besonders einfach auch für bestehende Systeme möglich.

Im Rahmen einer weiteren vorteilhaften Ausgestaltung des erfindungsgemäßen Sensors weist das Gasvolumen eine Größe in einem Bereich von ≥ 10µm³ bis ≤ 100mm³ auf. Dadurch wird die Menge an Gas, das bis zu dem Erreichen eines bestimmten Gaspartialdrucks und damit des Potentialsprungs in das Volumen gepumpt werden muss, sehr gering gehalten. Die Messperiode kann so zeitlich begrenzt ausgeführt werden, was ein sehr dynamisches Messverhalten des erfindungsgemäßen Sensors erlaubt. Darüber hinaus kann der Sensor sehr kompakt gehalten werden, was einen problemlosen Einbau, beispielsweise in den Abgasstrang eines Kraftfahrzeugs, nicht beeinträchtigt.

Im Rahmen einer weiteren vorteilhaften Ausgestaltung des erfindungsgemäßen Sensors ist eine Referenzelektrode vorgesehen, die mit dem Elektrolyt und einem Referenzgas in Kontakt steht. Besonders bevorzugt ist die Referenzelektrode luftumspült und von dem Gasstrom, insbesondere dem Abgasstrom, separiert. Folglich kann reine Luft als Referenzgas dienen. Es ist jedoch auch möglich, das Abgas als Referenzgas zu verwenden. In dieser Ausgestaltung kann beispielsweise ein Sprung des Galvanipotentials der inneren Pumpelektrode gegen die Referenzelektrode gemessen werden. Dadurch ist eine besonders genaue Messung möglich. Diese Ausgestaltung ist insbesondere dann von Vorteil, wenn die äußere Pumpelektrode mit einer der Messelektroden einstückig ausgebildet ist, da in diesem Fall eine sehr genaue Messung ohne die Einwirkung des Gasstroms beziehungsweise der in dem Gasstrom enthaltenen Substanzen möglich ist. Ebenso kann bei der Verwendung einer Referenzelektrode zu jeder Zeit ein Potentialsprung der inneren Pumpelektrode ermittelt werden. Die Referenzelektrode kann ferner vorteilhafterweise mit einem elektrischen Anschluss eines Heizers verbunden sein, so dass kein zusätzliches Kabel für die Referenzelektrode notwendig ist.

Im Rahmen einer weiteren vorteilhaften Ausgestaltung des erfindungsgemäßen Sensors ist eine dritte Pumpelektrode vorgesehen, die mit dem Elektrolyt und dem Gasstrom in Kontakt steht. Dadurch kann der erfindungsgemäße Sensor noch vielfältiger verwendet werden. Insbesondere wird die Messung einer in einer bestimmten Zeit geflossenen Ladung vereinfacht.

Im Rahmen einer weiteren vorteilhaften Ausgestaltung des erfindungsgemäßen Sensors ist eine vierte Pumpelektrode vorgesehen, die mit dem Elektrolyt und dem Gasvolumen in Kontakt steht. Auch die vierte Pumpelektrode verbessert die Verwendungsmöglichkeiten des erfindungsgemäßen Sensors weiter. Insbesondere kann mit der vierten Pumpelektrode ein Gaskreislauf erzeugt werden, der das Messergebnis durch eine vergrößerte Empfindlichkeit des Sensors weiter verbessert. Dabei ist die vierte Pumpelektrode, wie im Übrigen auch die weiteren Elektroden, also auch die dritte Pumpelektrode, die innere Pumpelektrode, die äußere Pumpelektrode, die Referenzelektrode, sowie die Messelektroden vorzugsweise aus Platin ausgestaltet.

Gegenstand der vorliegenden Erfindung ist ferner ein Verfahren zum Detektieren von Substanzen in einem Gasstrom, insbesondere von Rußpartikeln in einem Abgasstrom, umfassend die Schritte:
- Bereitstellen einer elektrochemischen Pumpzelle, aufweisend einen Elektrolyt, ein fluiddicht verschlossenes Gasvolumen, eine mit dem Elektrolyt und dem Gasvolumen in Kontakt stehende innere Pumpelektrode und eine mit dem Elektrolyt und einem sich außerhalb der Pumpzelle befindlichen Gas in Kontakt stehende äußere Pumpelektrode, die
- mit einer Messstruktur in Reihe geschaltet ist,
- Anlegen einer Pumpspannung an die innere Pumpelektrode und die äußere Pumpelektrode, um ausgehend von einem Anfangspunkt Gas in das Gasvolumen oder aus dem Gasvolumen zu pumpen,
- Detektieren eines Gaspartialdrucks in dem Inneren des verschlossenen Gasvolumens.

Das erfindungsgemäße Verfahren kann dabei insbesondere Verwendung finden bei einem Betreiben eines erfindungsgemäßen Sensors. Dadurch werden die Vorteile erzielt, die bereits mit Bezug auf den Sensor beschrieben worden sind, also insbesondere ein verbessertes Messverhalten.

Die Messstruktur kann dabei beispielsweise zwei Messelektroden umfassen, wie etwa zwei Interdigitalelektroden als Messelektroden, wie sie in einem Partikelsensor üblich ist. Die Messstruktur kann jedoch gleichermaßen eine weitere elektrochemische Pumpzelle sein, wie diese beispielsweise für einen Gassensor, wie etwa einen Stickoxidsensor, bekannt ist. Auch derartige Substanzen lassen sich durch Anlegen einer Pumpspannung etwa an die innere Pumpelektrode und die äußere Pumpelektrode durch die Pumpzelle elektrochemisch zersetzen und können so ein Gas, wie etwa Sauerstoff, in einem Gasvolumen bilden. Durch einen erhöhten Druck innerhalb des Gasvolumens bildet sich ein Potentialsprung an der inneren Pumpelektrode. Die von einem Startpunkt bis zu dem Potentialsprung und/oder von dem Potentialsprung zu einem Endpunkt verstrichene Zeit beziehungsweise geflossene Ladung lässt Rückschlüsse zu auf die etwa in dem Gasstrom vorhandenen Substanzen beziehungsweise auf Ihre Konzentration.

Das Anlegen einer Pumpspannung an die die innere Pumpelektrode und die äußere Pumpelektrode kann dabei gleichermaßen erfolgen durch das Anlegen einer Pumpspannung an die Reihenstruktur aus Pumpzelle und Messstruktur, beispielsweise an eine der Messelektroden und die innere Pumpelektrode.

Der Schritt des Detektierens des Gaspartialdrucks in dem Gasvolumen kann dabei auf verschiedenste Weise erfolgen. Beispielsweise kann die Spannung beziehungsweise ein Spannungssprung etwa zwischen den Pumpelektroden gemessen werden. Ferner kann etwa ein Stromsprung des durch die Reihenschaltung aus Messzelle und Pumpzelle fließenden Stroms als Folge des Potentialsprungs an der inneren Pumpelektrode, oder auch sich verstärkende Kreisströme gemessen werden, da diese Variablen direkt mit dem Partialdruck korrelieren.

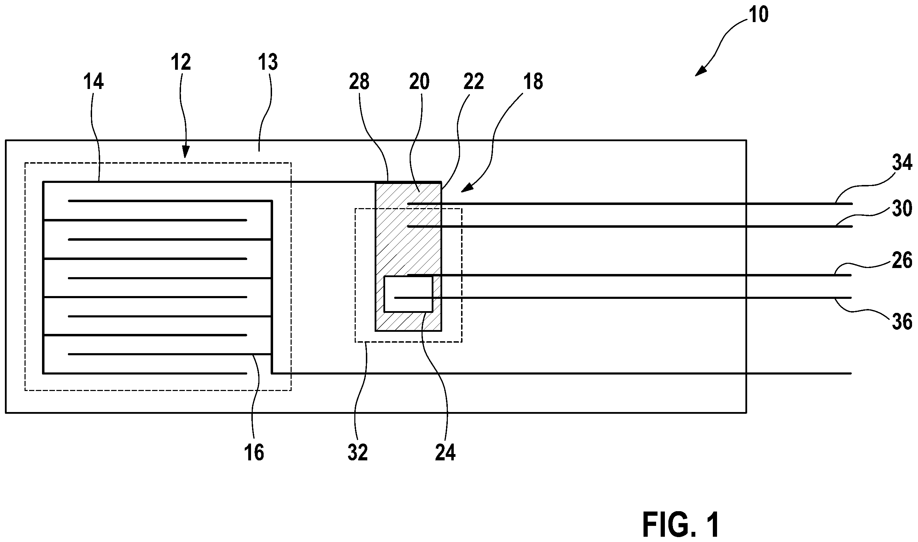

Weitere Vorteile und vorteilhafte Ausgestaltungen der erfindungsgemäßen Gegenstände werden durch die Zeichnung veranschaulicht und in der nachfolgenden Beschreibung erläutert. Dabei ist zu beachten, dass die Zeichnung nur beschreibenden Charakter hat und nicht dazu gedacht ist, die Erfindung in irgendeiner Form einzuschränken. Es zeigt
- Fig. 1: eine schematische Schnittansicht eines erfindungsgemäßen Sensors.

In Figur 1 ist ein Sensor 10 zum Detektieren von Substanzen in einem Gasstrom dargestellt. Der Sensor 10 dient insbesondere zur Detektion von elektrisch leitfähigen Teilchen beziehungsweise Rußpartikeln und dabei insbesondere zum Einbau in einen Abgasstrang eines Kraftfahrzeugs mit einer Brennkraftmaschine, wie einem Dieselmotor, und ist hier vorzugsweise nach einem Rußfilter angeordnet. Der Sensor 10 kann jedoch gleichermaßen in dem Bereich der Haustechnik eingesetzt werden, etwa bei einer Ölheizung. Im Folgenden wird jedoch in nicht beschränkender Weise auf einen Einsatz in dem Abgasstrang eines Fahrzeugs Bezug genommen.

Der Sensor 10 gemäß der Erfindung umfasst eine Messstruktur 12, die auf einem isolierenden Substrat 13, wie etwa Aluminiumoxid (Al₂O₃), angeordnet ist. Die Messstruktur 12 weist vorzugsweise wenigstens zwei Messelektroden 14, 16 auf, die als kammartig ineinander greifende Interdigitalelektroden ausgestaltet sein können, wie dies in Figur 1 zu erkennen ist. Die Messstruktur 12 beziehungsweise die Messelektroden 14, 16 sind zumindest teilweise in einem Gasstrom, wie insbesondere in einem Abgasstrom anordbar, etwa bei einem Einbau des Sensors 10 in dem Abgasstrang eines Fahrzeugs.

Der erfindungsgemäße Sensor 10 umfasst ferner eine elektrochemische Pumpzelle 18, die mit der Messstruktur 12, beziehungsweise mit dem Messelektroden 14, 16 in Reihe geschaltet ist. Die Pumpzelle 18 umfasst einen Elektrolyt 20, der in einem Elektrolytraum 22 angeordnet sein kann. Beispielsweise innerhalb des Elektrolytraums 22 ist ein Gasvolumen 24 angeordnet, das fluiddicht verschlossen ist. Beispielsweise kann das Gasvolumen 24 zumindest teilweise an den Elektrolyt 20 angrenzen, wodurch es zugleich mit dem Elektrolyt 20 in Kontakt ist und an dieser Stelle auch gasdicht verschlossen ist. Auf diese Weise ist ein fluidisches Ein- oder Ausströmen von Gas in das Gasvolumen 24 oder aus dem Gasvolumen 24 heraus nicht möglich. Das Gasvolumen 24 kann beispielsweise ein Volumen in einem Bereich von 10mm³ aufweisen. Die Pumpzelle 18 umfasst darüber hinaus eine innere Pumpelektrode 26 und eine äußere Pumpelektrode 28. Die innere Pumpelektrode 26 steht dabei mit dem Elektrolyt 20 und dem Gasvolumen 24 in Kontakt, wohingegen die äußere Pumpelektrode 28 mit dem Elektrolyt 20 und einem sich außerhalb der Pumpzelle 18 befindlichen Gas in Kontakt steht. Das sich außerhalb der Pumpzelle 18 befindliche Gas kann dabei beispielsweise die den Sensor 10 umgebende Luft, oder auch der Gasstrom mit den zu vermessenden Substanzen sein. Ferner kann die äußere Pumpelektrode 28 als eine der Messelektroden 14 ausgebildet sein, also beispielsweise einstückig mit dieser ausgebildet sein.

Die Pumpzelle 18 kann generell durch Übereinanderdrucken von Gasvolumen 24, innerer Pumpelektrode 26, Elektrolyt 20 und äußerer Pumpelektrode 28 auf kleiner Oberfläche realisiert werden, wobei sich die innere Pumpelektrode 26 sowie die äußere Pumpelektrode 28 zweckmäßigerweise auf der Außenseite des Sensors 10 befinden.

Der Elektrolyt 20 ist zweckmäßigerweise ein solcher, mit dem durch das Anlegen einer geeigneten Spannung in das Gasvolumen 24 ein Gas pumpbar ist. So kann der Elektrolyt 20 beispielsweise als Niedertemperatur-Elektrolyt ausgebildet sein, der bereits bei Raumtemperatur Ionen leitet und so wie gewünscht arbeitet. Beispielhafte Elektrolyte, die verwendet werden können, umfassen beispielsweise Polymerelektrolyte, wie etwa 2-[1-[Difluor[(trifluorethenyl)oxy]methyl]-1,2,2,2-tetrafluorethoxy]-1,1,2,2-tetrafluorethansulfonsäure, oder Protonenleiter.

Alternativ kann der Elektrolyt 20 auch ein solcher sein, der eine erhöhte Temperatur benötigt, um wie gewünscht zu arbeiten. Beispielsweise kann Zirkondioxid (ZrO₂) oder ein anderweitiger Hochtemperaturelektrolyt verwendet werden. In diesem Fall ist es bevorzugt, dass ein Heizelement vorgesehen ist, mit dem die Messstruktur 12 und die Pumpzelle 18, insbesondere der Elektrolyt 20, heizbar sind. Das Heizelement kann dann derart angeordnet werden, dass nur ein Heizelement für sowohl den Elektrolyt 20, als auch die Messstruktur 12 notwendig ist. Dabei sollte das Heizelement vorzugsweise derart angeordnet sein, dass die Messelektroden 14, 16 während der Messung eine Temperatur von 150°C nicht überschreiten, wobei eine ausreichende Regenerierungstemperatur beziehungswiese Abbrandtemperatur sichergestellt sein muss.

Ferner können zwei separate Heizelemente verwendet werden, die sich eine Masseleitung beispielsweise unter der Pumpzelle 18 teilen können, so dass die Temperatur für beide Zonen separat einstellbar ist.

Beispielsweise kann die Messstruktur 12 beziehungsweise die Messelektroden 14, 16 als Heizmäander ausgeführt sein, also mit zwei Zuleitungen versehen sein. So kann in einer getakteten Heizerphase der Heizerstrom getrieben werden, und in den Heizpausen das Gas, wie etwa der Sauerstoff, von der äußeren Pumpelektrode 28 zu der inneren Pumpelektrode 26 gepumpt beziehungsweise die Nernstspannung gemessen werden, wie dies später erläutert wird.

Weiterhin kann eine Referenzelektrode 30 vorgesehen sein, die mit dem Elektrolyt 20 und einem Referenzgas in Kontakt steht und ebenfalls zweckmäßigerweise an der Außenseite des Sensors 10 angeordnet ist. Das Referenzgas kann dabei sowohl das Abgas beziehungsweise der zu untersuchende Gasstrom sein, oder besonders vorzugsweise ein Referenzluftkanal, der die den Sensor 10 umgebende Luft enthält. Eine gegebenenfalls vorgesehene Referenzelektrode 30 kann ebenfalls aufgedruckt und elektrolytisch leitend mit der inneren Pumpelektrode 26 verbunden sein. Die Referenzelektrode 30 sollte daher vorzugsweise von dem Gasstrom isoliert und in einem beispielsweise aufgedruckten Luftreferenzkanal angeordnet sein. Die Referenzelektrode 30 kann auch unterhalb der inneren Pumpelektrode 26 in dem Substrat 13 angeordnet sein, etwa in einem Referenzluftkanal. Ferner kann die Referenzelektrode 30 in einem abgeschlossenen Gasvolumen angeordnet sein, wo beispielsweise einmal oder mehrmals Sauerstoff hineingepumpt wird, um definierte Umgebungsbedingungen für die Referenzelektrode 30 zu erhalten,

Vorzugsweise sind die innere Pumpelektrode 26, die äußere Pumpelektrode 28 das Gasvolumen 24 der Elektrolyt 20 und gegebenenfalls die Referenzelektrode 30 zumindest teilweise durch eine elektrisch isolierende Deckschicht 32 abgedeckt, um Leckströme zu verhindern und insbesondere eine wirksame Abschottung gegenüber dem zu untersuchenden Gasstrom zu erreichen. Für eine isolierende Deckschicht geeignete Materialien umfassen beispielsweise Aluminiumoxid, etwa in einer Dicke von 100µm.

Weiterhin können sowohl das Gasvolumen 24, die innere Pumpelektrode 26, als auch die äußere Pumpelektrode 28 auf das Substrat 13 aufgedruckt sein.

Im Folgenden werden verschiedene Ausführungsformen der Verwendung des erfindungsgemäßen Sensors 10 beschrieben. Grundsätzlich kann bei einer Verwendung des erfindungsgemäßen Sensors 10 ausgenutzt werden, dass aufgrund des zunehmenden Stroms zwischen den Messelektroden 14, 16, durch die Anordnung mit einer in Reihe geschalteten Pumpzelle 18 je nach Polung beziehungsweise Polarität der Messstruktur 12 beziehungsweise der Pumpzelle 18 ein Gas in das Gasvolumen 24 einbringbar beziehungsweise aus diesem ausbringbar ist. Die mit diesem Pumpen beziehungsweise mit der Gasbildung, also insbesondere mit dem Gaspartialdruck, zusammenhängenden Effekte können erfindungsgemäß gemessen und ausgewertet werden, wodurch auf den zwischen den Messelektroden 14, 16 fließenden Strom und damit auf die Konzentration der in dem Gas vorhandenen Substanzen geschlossen werden kann.

In einer ersten Ausführungsform wird ausgenutzt, dass bei steigendem Partialdruck eines in das Gasvolumen 24 gepumpten Gases, beziehungsweise sobald der Partialdruck in dem Gasvolumen 24 in einem definierten Bereich liegt, das Galvanipotential der inneren Pumpelektrode 26 sprunghaft um beispielsweise mehrere hundert mV ansteigt. Dieser Potentialsprung kann ausgehend von der inneren Pumpelektrode 26 gegen die äußere Pumpelektrode 28, eine Messelektrode16 oder etwa gegen die Referenzelektrode 30 gemessen werden. Im Anschluss kann durch Umkehrung der Pumpspannung beziehungsweise der Spannung der Messelektroden 14, 16 oder durch Pumpen zur Referenzelektrode 30 das Gasvolumen 24 wieder leergepumpt werden. Ein Leerpumpen bedeutet hier, dass das gebildete Gas vollständig aus dem Gasvolumen 24 entfernt wird. Ein anderes Gas, wie etwa ein Inertgas, kann weiterhin als Basisgas in dem Gasvolumen 24 vorhanden sein, da es eine Messung hier nicht stört.

Die Spannung zwischen den beiden Messelektroden 14, 16 kann dann in definierten Zeitabständen, beispielsweise jede Sekunde oder alle zehn Sekunden, kurzzeitig unterbrochen werden und die Spannung der Reihenschaltung aus Messstruktur 12, die einen aufgeladenen Kondensator bildet, und Pumpzelle 18, gemessen werden, um den Potentialsprung zu ermitteln. Wird der Sensor 10 galvanostatisch betrieben, also bei konstanter und zweckmäßigerweise bekannter Stromstärke, beispielsweise in einem Bereich von 1µA, kann die Befüllung des Gasvolumens 24 jederzeit anhand eines Sprunges der benötigten Sensorspannung registriert und verfolgt werden.

Bei Ermittlung des Potentialsprungs ist dann beispielsweise die Zeit zwischen einem Leerpumpen und dem Potentialsprung ein Maß für die Konzentration der Substanzen in dem Gasstrom, also insbesondere der Rußpartikel in dem Abgasstrom. So können bereits sehr kleine Messströme zu kurzen Auslösezeiten führen. Das Verfahren ermöglicht eine große Signalgenauigkeit und einen dynamischen Messbetrieb. Ferner entfällt beträchtlicher Aufwand in der Signalverarbeitung, weil ein Spannungssprung um mehrere hundert mV deutlich leichter zu detektieren ist, als ein Strom im µA-Bereich, der zudem leicht durch Untergundströme/Nebenschlüsse verfälscht sein kann. Beispielsweise werden im Stand der Technik oftmals Stromstärken in einem Bereich von 12 µA verwendet.

Die zum Potentialsprung notwendige Ladung beziehungsweise Zeit kann reduziert werden, wenn beispielsweise beim Leerpumpen während der Initialisierungsphase nicht das vollständige Gas, wie etwa der vollständige Sauerstoff, aus dem Gasvolumen 24 gepumpt wird, sondern nur eine definierte, kleine Menge. Ebenso kann das Gasvolumen 24 so gering sein, dass es nur aus der porösen inneren Pumpelektrode 26 und ihrer Zuleitung besteht. Dadurch sind ferner besonders genaue Messungen möglich.

Alternativ kann die Messung derart ausgeführt werden, dass nach völligem Leerpumpen zuerst eine definierte Menge an Gas in das Gasvolumen 24 eingebracht wird, beispielsweise durch Pumpen von der Referenzelektrode 30 oder von der mit einer separat zuschaltbaren Zuleitung versehenen äußeren Pumpelektrode 28. Dann wird während der Integrationsphase des Gases über die Reihenschaltung der Messstruktur 12 und der Pumpzelle 18 Gas abgepumpt, bis der Potentialsprung auftritt. Danach wird das Gasvolumen wieder definiert befüllt.

Auch ein alternierender Betrieb der Pumpspannung ist denkbar. Nach einem Potentialsprung wird die Polarität der Pumpspannung noch so lange beibehalten, bis eine weitere definierte Ladungsmenge geflossen ist. Dann wird die Pumpspannung umgepolt und das Gasvolumen 24 wieder bis zum Rücksprung des Potentials abgepumpt. Die zwischen Umpolen und Spannungssprung verstrichene Zeit ist das Maß für den Strom in der Messstruktur 12, also die in dem Gas befindliche Konzentration an zu detektierenden Substanzen, wie etwa die Rußkonzentration. Nach diesem Sprung wird noch für eine gewisse Zeitdauer beziehungsweise eine bestimmte Ladungsmenge in dieselbe Richtung weitergepumpt, bevor wieder die Pumpspannung umgepolt wird. Die darauf folgende Zeitdauer bis zum Potentialsprung ist wieder das Maß für den Strom in der Messstruktur 12.

Dieses Verfahren ist dabei nicht begrenzt auf die Verwendung einer Pumpzelle 18 mit in Reihe geschalteter Interdigitalstruktur als Messstruktur 12. Es kann beispielsweise auch eine weitere Pumpzelle als Messstruktur 12 verwendet werden, um beispielsweise Stickoxide zu detektieren, wobei dann die Pumpzelle 18 und gegebenenfalls eine oder eine Vielzahl weiterer Pumpelektroden anstelle der Messzelle 12 vorgesehen sind, die mit dem Elektrolyt und gegebenenfalls einem außerhalb der Pumpzelle 18 sich befindlichen Gas in Kontakt sind. Diese zusätzlichen Pumpelektroden können dann mit Bezug auf das Pumpen die Funktion der Messzelle 12 übernehmen.

Die Gasbildung ist dabei unter anderem abhängig von dem verwendeten Elektrolyt 20. So kann bei der Verwendung von Zirkondioxid als Elektrolyt 20 beispielsweise durch einen Sauerstoffionenstrom (O²⁻) durch den Elektrolyt 20 Sauerstoff in das Gasvolumen 24 gepumpt werden. Dabei erfolgt der Potentialsprung bei einem Partialdruck in einem Bereich von 10⁻⁹ bar. Das Potential beträgt in diesem Fall vor dem Spannungssprung ungefähr 40V und nach dem Spannungssprung ungefähr 39,2V, der Potentialsprung beträgt somit ungefähr 0,8V. Es ist jedoch je nach verwendetem Elektrolyt auch möglich, andere Gase in dem Gasvolumen 24 zu erzeugen, wie etwa Wasserstoff. In diesem Fall ist ein aus Nafion oder Polybenzimidazol hergestellter Elektrolyt zu bevorzugen.

In einer weiteren vorteilhaften Möglichkeit der Verwendung des erfindungsgemäßen Sensors 10 wird die während einer definierten Integrationszeit erzeugte Gasmenge, wie etwa Sauerstoffmenge, gemessen. Dies kann beispielsweise dadurch realisiert werden, dass der Druck innerhalb des Gasvolumens 24 gemessen oder der Strom bei einem Voll- oder Leerpumpen des Gasvolumens 24 aufintegriert wird. Die so erzeugte Druckänderung beziehungsweise die dabei umgesetzte Ladung ist ein Maß für die Substanzkonzentration, wie etwa die Rußkonzentration in dem Abgas. Sie ist genauer messbar als ein Stromschwellenwert gemäß dem Stand der Technik, weil die beim Pumpen, wie etwa Leerpumpen, fließenden Ströme insbesondere am Anfang größer sind, als die Ströme während dem Endzyklus der Integrationszeit. Vorzugsweise werden daher nur die großen Ströme zu Beginn des Leerpumpens für eine definierte Zeitdauer aufintegriert und bewertet.

Die durch die Messstruktur 12 geflossenen Ströme können beispielsweise integriert werden, indem man das Gasvolumen 24 im normalen Sensorbetrieb auffüllt und nach einer definierten Zeit die komplette angesammelte Gasmenge beispielsweise mit Hilfe einer dritten Pumpelektrode 34, die mit dem Elektrolyt 20 und ferner mit dem Gasstrom in Kontakt steht, oder der Referenzelektrode 30 aus dem Gasvolumen 24 abpumpt, was beispielsweise durch eine hinreichend lange Pumpdauer sichergestellt sein kann. Hierbei fließen erneut während der Abpumpzeit insbesondere am Anfang deutlich größere Ströme als im normalen Sensorbetrieb, weshalb dieser Messmodus vorteilhaft ist. Die abpumpbare gesamte Ladung oder der Strom nach einer definierten Zeit nach Beginn des Abpumpens ist ein Maß für die Substanzkonzentration im Abgas. Die dritte Pumpelektrode kann auch mit einem Heizerpotential elektrisch verbunden sein, so dass kein zusätzliches Kabel notwendig ist. Die Verwendung einer dritten Pumpelektrode 34 ist dabei besonders geeignet, da sie im Abgas angeordnet sein kann und der erfindungsgemäße Aufbau deshalb einfacher im Aufbau sein kann als bei Verwendung einer Referenzelektrode 30, die vorzugsweise in einem Referenzluftkanal angeordnet ist. Darüber hinaus ist das Abpumpen über eine dritte Pumpelektrode 34 einfacher und schneller zu realisieren als beispielsweise über die zweite Pumpelektrode 28, da bei letzterer aufgrund der Verbindung zu der Messstruktur 12 ein höherer Widerstand auftreten würde.

Alternativ kann auch erst das Gasvolumen 24 mit einer definierten Gasmenge aufgefüllt werden, indem von der dritten Pumpelektrode 34 zur inneren Pumpelektrode 26 Gas mit messbarem Strom gepumpt wird. Danach wird der Sensor 10 derart betrieben, dass die Ströme der Messstruktur 12 das Gasvolumen 24 leerpumpen. Nach einer definierten Zeit wird mit Hilfe der dritten Pumpelektrode 34 das Gasvolumen 24 komplett leergepumpt und dabei die noch im Gasvolumen 24 verbliebene Gasmenge ermittelt. Die Differenz zur anfangs hineingepumptem Gasmenge ist dann ein Maß für die Substanzkonzentration im Abgas.

In dem Fall, dass eine vierte Pumpelektrode 36 vorgesehen ist, die mit dem Gasvolumen 24 und dem Elektrolyt 20 in Kontakt steht, kann ferner ein Kreisstrom an gebildetem Gas, also etwa Sauerstoff, gebildet werden. Dazu wird beispielsweise an der inneren Pumpelektrode 26 oder der dritten Pumpelektrode 34 das gebildete Gas ionisiert und wandert als Ion durch den Elektrolyt 20 zu der vierten Pumpelektrode 36. Dazu wird vorzugsweise eine geeignete Spannung von etwa 500mV an der inneren Pumpelektrode 26 oder der dritten Pumpelektrode 34 und der vierten Pumpelektrode 36 angelegt. Bei Letzterer wird das Gas beziehungsweise die Ionen wieder in Sauerstoff umgewandelt und reichert sich in dem Gasvolumen 24 an, und diffundiert wieder zur inneren Pumpelektrode 26 oder der dritten Pumpelektrode 34 zurück. Die daraus resultierenden Kreis-Ströme sind deutlich größer, als beispielsweise die Ströme, die sich bei einem Befüllen des Gasvolumens ausbilden. Durch diese Verstärkung kann die Messung daher weiter verbessert und die Empfindlichkeit erhöht werden.

Es ist ferner möglich, interne Leckströme, die das Ergebnis verfälschen würden, zu berücksichtigen, da ein Teil des Ladestroms nicht zum Gaspumpen verwendet würde beziehungsweise sich das Gasvolumen 24 selbst befüllen beziehungsweise entleeren würde. Dazu können diese beispielsweise bei der Herstellung des Sensors 10 gemessen und in dem späteren Messverfahren des Sensors 10 einfließen. Beispielhaft bei der Anordnung des Sensors in dem Abgasstrang eines Kraftfahrzeugs kann zunächst in einem mageren Abgas (λ>1) Sauerstoff in das Gasvolumen 24 gepumpt, woraufhin das Abgas durch ein Inertgas ersetzt wird. Daraufhin wird soviel Gas aus dem Gasvolumen 24 abgepumpt, bis beispielsweise zwischen der inneren Pumpelektrode 26 und der äußeren Pumpelektrode 28 eine definierte Nernstspannung vorliegt, etwa 450mV. Daraufhin wird der äußere Stromfluss unterbunden und nur noch die Nernstspannung zwischen der inneren Pumpelektrode 26 und der äußeren Pumpelektrode 28 überwacht. Bei bekannter Größe des Gasvolumens 24 kann aus der zeitlichen Abnahme der Nernstspannung auf die vorhandenen Leckströme geschlossen werden.

Für den Fall, dass die Größe des Gasvolumens 24 nicht genau bekannt ist, kann dieses ermittelt werden, indem nach Einstellen einer definierten Nernstspannung zwischen der inneren Pumpelektrode 26 und der äußeren Pumpelektrode 28, etwa in Höhe von 450 mV, Gas aus dem Gasvolumen 24 gepumpt wird und die folgende zeitliche Zunahme der Nernstspannung überwacht wird. Die Spannungszunahme entspricht der Gaskonzentrationszunahme, wobei wiederum anhand der Größe des fließenden Stroms das Gasvolumen 24 errechenbar ist.

Derartige Messungen können gleichermaßen in einem Fahrzeug durchgeführt werden, indem das benötigte Magergas und das Inertgas, das in diesem Fall ein Gas mit λ>1 sein kann, mit Hilfe einer Lambdasonde einstellbar ist.

## Patentansprüche

1. Sensor zum Detektieren von Rußpartikeln in einem Abgasstrom, umfassend eine wenigstens zwei Messelektroden (14, 16) aufweisende Messstruktur (12) und eine elektrochemische Pumpzelle (18), wobei die Messstruktur (12) und die Pumpzelle (18) in Reihe geschaltet sind, wobei die Pumpzelle (18) einen Elektrolyt (20) aufweist, **dadurch gekennzeichnet, dass** die Pumpzelle ein mit dem Elektrolyt (20) in Kontakt stehendes fluiddicht verschlossenes Gasvolumen (24), eine mit dem Elektrolyt (20) und dem Gasvolumen (24) in Kontakt stehende innere Pumpelektrode (26) und eine mit dem Elektrolyt (20) und einem sich außerhalb der Pumpzelle (18) befindlichen Gas in Kontakt stehende äußere Pumpelektrode (28) aufweist.

2. Sensor nach Anspruch 1, **dadurch gekennzeichnet, dass** die äußere Pumpelektrode (28) mit einer der Messelektroden (14) einstückig ausgebildet ist.

3. Sensor nach Anspruch 1 oder 2, **dadurch gekennzeichnet, dass** die innere Pumpelektrode (26), die äußere Pumpelektrode (28), der Elektrolyt (20) und das Gasvolumen (24) teilweise durch eine elektrisch isolierende Deckschicht (32) abgedeckt sind.

4. Sensor nach einem der Ansprüche 1 bis 3, **dadurch gekennzeichnet, dass** ein Heizelement vorgesehen ist, um die Messstruktur (12) und den Elektrolyt (20) zu erhitzen.

5. Sensor nach einem der Ansprüche 1 bis 3, **dadurch gekennzeichnet, dass** der Elektrolyt (20) als Niedertemperatur-Elektrolyt ausgebildet ist.

6. Sensor nach einem der Ansprüche 1 bis 5, **dadurch gekennzeichnet, dass** das Gasvolumen (24) eine Größe in einem Bereich von ≥ 10µm³ bis ≤ 100mm³ aufweist.

7. Sensor nach einem der Ansprüche 1 bis 6, **dadurch gekennzeichnet, dass** eine Referenzelektrode (30) vorgesehen ist, die mit dem Elektrolyt (20) und einem Referenzgas in Kontakt steht.

8. Sensor nach einem der Ansprüche 1 bis 7, **dadurch gekennzeichnet, dass** eine dritte Pumpelektrode (34) vorgesehen ist, die mit dem Elektrolyt (20) und dem Gasstrom in Kontakt steht.

9. Sensor nach einem der Ansprüche 1 bis 8, **dadurch gekennzeichnet, dass** eine vierte Pumpelektrode (36) vorgesehen ist, die mit dem Elektrolyt (20) und dem Gasvolumen (24) in Kontakt steht.

10. Verfahren zum Detektieren von Rußpartikeln in einem Abgasstrom, umfassend die Schritte:
- Bereitstellen einer elektrochemischen Pumpzelle (18), aufweisend einen Elektrolyt (20), ein fluiddicht verschlossenes Gasvolumen (24), eine mit dem Elektrolyt (20) und dem Gasvolumen (24) in Kontakt stehende innere Pumpelektrode (26) und eine mit dem Elektrolyt (20) und einem sich außerhalb der Pumpzelle (18) befindlichen Gas in Kontakt stehende äußere Pumpelektrode (28), die
- mit einer Messstruktur (12) in Reihe geschaltet ist,
- Anlegen einer Pumpspannung an die innere Pumpelektrode (26) und die äußere Pumpelektrode (28), um ausgehend von einem Anfangspunkt Gas in das Gasvolumen (24) oder aus dem Gasvolumen (24) zu pumpen,
- Detektieren eines Gaspartialdrucks in dem Inneren des Gasvolumens (24).

## Claims

1. Sensor for detecting particulates in an exhaust gas flow, comprising a measuring structure (12) having at least two measuring electrodes (14, 16) and comprising an electrochemical pumping cell (18), the measuring structure (12) and the pumping cell (18) being connected in series, the pumping cell (18) having an electrolyte (20), **characterized in that** the pumping cell has a fluid-tightly sealed gas volume (24), which is in contact with the electrolyte (20), an inner pumping electrode (26), which is in contact with the electrolyte (20) and the gas volume (24), and an outer pumping electrode (28), which is in contact with the electrolyte (20) and a gas located outside the pumping cell (18).

2. Sensor according to Claim 1, **characterized in that** the outer pumping electrode (28) is formed in one piece with one of the measuring electrodes (14).

3. Sensor according to Claim 1 or 2, **characterized in that** the inner pumping electrode (26), the outer pumping electrode (28), the electrolyte (20) and the gas volume (24) are partially covered by an electrically insulating covering layer (32).

4. Sensor according to one of Claims 1 to 3, **characterized in that** a heating element is provided in order to heat the measuring structure (12) and the electrolyte (20).

5. Sensor according to one of Claims 1 to 3, **characterized in that** the electrolyte (20) is formed as a low-temperature electrolyte.

6. Sensor according to one of Claims 1 to 5, **characterized in that** the gas volume (24) has a size in a range from ≥ 10 µm³ to ≤ 100 mm³.

7. Sensor according to one of Claims 1 to 6, **characterized in that** a reference electrode (30), which is in contact with the electrolyte (20) and a reference gas, is provided.

8. Sensor according to one of Claims 1 to 7, **characterized in that** a third pumping electrode (34), which is in contact with the electrolyte (20) and the gas flow, is provided.

9. Sensor according to one of Claims 1 to 8, **characterized in that** a fourth pumping electrode (36), which is in contact with the electrolyte (20) and the gas volume (24), is provided.

10. Method for detecting particulates in an exhaust gas flow, comprising the steps of:
- providing an electrochemical pumping cell (18), having an electrolyte (20), a gas-tightly sealed gas volume (24), an inner pumping electrode (26), which is in contact with the electrolyte (20) and the gas volume (24), and an outer pumping electrode (28), which is in contact with the electrolyte (20) and a gas located outside the pumping cell (18), which pumping cell
- is connected in series with a measuring structure (12),
- applying a pumping voltage to the inner pumping electrode (26) and the outer pumping electrode (28), in order, starting from an initial point, to pump gas into the gas volume (24) or out of the gas volume (24),
- detecting a partial gas pressure in the interior of the gas volume (24).

## Revendications

1. Capteur destiné à la détection de particules de suie dans un flux de gaz d'échappement, comprenant une structure de mesure (12), laquelle présente tout au moins deux électrodes de mesure (14, 16), et une cellule de pompage électrochimique (18) ;
dans lequel la structure de mesure (12) et la cellule de pompage (18) sont connectées en série ;
dans lequel la cellule de pompage (18) présente un électrolyte (20),
**caractérisé en ce que** la cellule de pompage présente un volume de gaz (24), lequel se trouve dans un environnement fermé et étanche aux fluides et lequel se trouve en contact avec l'électrolyte (20), une électrode de pompage (26) interne, laquelle se trouve en contact avec l'électrolyte (20) et le volume de gaz (24), ainsi qu'une électrode de pompage (28) externe, laquelle se trouve en contact avec l'électrolyte (20) et avec un gaz qui se trouve à l'extérieur de la cellule de pompage (18).

2. Capteur selon la revendication 1, **caractérisé en ce que** l'électrode de pompage (28) externe est conçue d'une seule pièce avec l'une des électrodes de mesure (14).

3. Capteur selon la revendication 1 ou 2, **caractérisé en ce que** l'électrode de pompage (26) interne, l'électrode de pompage (28) externe, l'électrolyte (20) et le volume de gaz (24) sont recouverts, tout au moins en partie, par une couche de revêtement (32) électriquement isolante.

4. Capteur selon l'une des revendications 1 à 3, **caractérisé en ce qu'**un élément de chauffage est prévu en vue de chauffer la structure de mesure (12) et l'électrolyte (20).

5. Capteur selon l'une des revendications 1 à 3, **caractérisé en ce que** l'électrolyte (20) est conçu sous la forme d'un électrolyte à basse température.

6. Capteur selon l'une des revendications 1 à 5, **caractérisé en ce que** le volume de gaz (24) présente une grandeur dans une plage comprise entre ≥ 10 µm³ et ≤ 100 mm³.

7. Capteur selon l'une des revendications 1 à 6, **caractérisé en ce qu'**une électrode de référence (30) est prévue, laquelle se trouve en contact avec l'électrolyte (20) et un gaz de référence.

8. Capteur selon l'une des revendications 1 à 7, **caractérisé en ce qu'**une troisième électrode de pompage (34) est prévue, laquelle se trouve en contact avec l'électrolyte (20) et le flux de gaz.

9. Capteur selon l'une des revendications 1 à 8, **caractérisé en ce qu'**une quatrième électrode de pompage (36) est prévue, laquelle se trouve en contact avec l'électrolyte (20) et le volume de gaz (24).

10. Procédé destiné à la détection de particules de suie dans un flux de gaz d'échappement, comprenant les phases suivantes :
- la mise à disposition d'une cellule de pompage (18) électrochimique qui présente un électrolyte (20), un volume de gaz (24) dans un environnement fermé et étanche aux fluides, une électrode de pompage interne (26) qui se trouve en contact avec l'électrolyte (20) et le volume de gaz (24), ainsi qu'une électrode de pompage externe (28) qui se trouve en contact avec l'électrolyte (20) et un gaz qui se trouve à l'extérieur de la cellule de pompage (18),
- laquelle cellule de pompage est connectée en série avec une structure de mesure (12) ;
- l'application d'une tension de pompage sur l'électrode de pompage interne (26) et sur l'électrode de pompage externe (28), en vue de pomper du gaz dans le volume de gaz (24) depuis un point de départ, ou en dehors du volume de gaz (24) ;
- la détection d'une pression partielle de gaz à l'intérieur du volume de gaz (24).
